# FASCICULE DE BREVET EUROPEEN

(11) **EP 0 490 082 B1**
(45) Date de publication et mention de la délivrance du brevet: **07.06.1995**
(21) Numéro de dépôt: 91118878.7
(22) Date de dépôt: 06.11.1991
(51) Int. Cl.: A23P 1/02, A23L 1/40

(54) **Granulés d'une matière de base pour sauces et potages**
Granulierte Grundmasse für Sossen und Suppen
Granulated base material for sauces and soups

(30) Priorité: 07.12.1990 CH 3878/90
(43) Date de publication de la demande: 17.06.1992
(73) Titulaire: SOCIETE DES PRODUITS NESTLE S.A., 1800 Vevey (CH)
(72) Inventeur: Odermatt, Robert Gerald, CH-8500 Frauenfeld (DE); Roeschli, David, CH-8422 Pfungen (CH)

(56) Documents cités:
- EP-A- 0 129 235
- EP-A- 0 180 281
- FR-A- 2 614 765

## Description

La présente invention a pour objet un procédé de préparation de granulés d'une matière alimentaire de base pour sauces et potages à partir d'une matière amylacée et d'une graisse, ainsi qu'un appareil pour la mise en oeuvre de ce procédé.

On connaît par le brevet FR 1602733 un procédé de fabrication de mélanges pulvérulents de matières grasses et de supports pulvérulents à l'aide d'un malaxeur chauffable comportant un couteau tournant et une grille de sortie. Ce document illustre bien les difficultés rencontrées à éviter la formation d'amas indissociables dès que la proportion de matière grasse devient importante dans le mélange.

On connaît par le brevet EP 29153 un procédé de fabrication d'une matière alimentaire de base instantanément dispersable dans l'eau bouillante, dans lequel un mélange de matière amylacée et de graisse fondue est déposé sur un tambour ou une bande de refroidissement, le mélange solidifié est détaché par un couteau et le produit obtenu se présente ainsi sous forme de flocons.

La présente invention a pour but de proposer un procédé et un appareil permettant une préparation aisée et reproductible d'une matière alimentaire de base pour sauces et potages, à partir d'une matière amylacée et d'une graisse, qui se présente sous forme de granulés à écoulement libre.

A cet effet, dans le procédé de préparation de granulés d'une matière alimentaire de base pour sauces et potages à partir d'une matière amylacée et d'une graisse selon la présente invention,
i) on fait fondre la graisse et l'on mélange la matière amylacée et la graisse fondue,
ii) on extrude le mélange sous forme de boudins,
iii) on refroidit les boudins pour les durcir et on les subdivise en tronçons, et
iv) l'on réduit les tronçons de boudins en granules en les projetant au travers d'une grille.

De même, l'appareil pour la mise en oeuvre du procédé selon la présente invention comprend
i) un dispositif de chauffage d'une graisse et un dispositif de mélange d'une matière amylacée et de la graisse fondue,
ii) un dispositif d'extrusion du mélange sous forme de boudins,
iii) un dispositif de refroidissement et subdivision des boudins en tronçons, et
iv) un dispositif de granulation des tronçons de boudins.

Un tel procédé et un tel appareil permettent en effet de préparer une matière alimentaire de base à partir d'une matière amylacée et d'une graisse qui se présente sous forme de granulés à écoulement libre, qui est dispersable dans l'eau bouillante et qui se prête ainsi à la préparation aisée de sauces liées et de potages.

Pour mettre en oeuvre le présent procédé, on part d'une matière amylacée telle qu'une farine de céréale, seule ou en mélange avec un complément d'amidon tel que l'amidon de maïs, de pomme de terre, de blé, de riz, ou de tapioca, par exemple. On peut y ajouter, le cas échéant, d'autres agents épaississants tels que la gomme de guar ou la pectine, voire même de la gélatine, par exemple. On peut même y ajouter directement des agents entrant traditionnellement dans la composition de sauces et potages déshydratés, tels que des agents aromatisants, des renforçateurs d'arôme, notamment du glutamate de sodium, des agents colorants, du sel de cuisine, des épices, de l'extrait de viande ou de levure, des protéines hydrolysées ou du sucre, par exemple, la quantité totale de ces agents ajoutés devant cependant représenter une proportion pondérale relativement faible ou mineure de ladite matière amylacée.

Dans une forme de réalisation préférée du présent procédé, on utilise comme matière amylacée une farine de blé préséchée présentant une teneur en humidité résiduelle de 3-10%. On peut également utiliser une farine de blé non-préséchée présentant une teneur en humidité de environ 12 à 17% et prévoir une étape de chauffage au cours duquel une proportion notable de cette humidité soit vaporisée, si l'on désire préparer une matière alimentaire de base pour sauce du type roux.

Le choix de la graisse est dicté d'une part par des considérations organoleptiques pour lesquelles elle ne doit pas rester solide ou se solidifier à une température trop élevée, et d'autre part par des considérations pratiques de transport, de conservation et de manipulation pour lesquelles elle ne doit pas fondre à température ambiante. C'est ainsi que l'on choisit de préférence une graisse, notamment une graisse d'arachides ou de palme, présentant un point de limpidité de environ 35-50°C, de préférence environ 44-48°C.

Le présent procédé se prête particulièrement bien à la préparation de granulés à écoulement libre d'une matière alimentaire de base relativement riche en graisse. C'est ainsi qu'à l'étape i) du présent procédé, on mélange de préférence la matière amylacée et la graisse dans un rapport pondéral de environ 75:25 à 50:50, de préférence environ 65:35 à 55:45.

On réalise de préférence ce mélange dans une vis mélangeuse horizontale, simple ou double, à double manteau. En effet, si la température de ce mélange peut être déterminée principalement par la température de la graisse, que l'on fait fondre de préférence à environ 50-60°C, et par la température de la matière amylacée, qui est de préférence la température ambiante, il est avantageux de pouvoir ajuster finement la température du mélange avant extrusion. On peut ainsi lui conférer une texture optimale qui n'offre pas trop de résistance à l'extrusion tout en donnant suffisamment de fermeté aux boudins.

A l'étape ii) du présent procédé, on extrude de préférence ledit mélange sous forme de boudins cylindriques de environ 3-10 mm de diamètre, notamment en le pressant au travers d'un dispositif d'extrusion comprenant de préférence une chambre de déviation prévue à une extrémité aval de ladite vis mélangeuse et communiquant avec une rangée de tubes d'extrusion verticaux pouvant donc présenter un diamètre intérieur de 3-10 mm, par exemple.

A l'étape iii) du présent procédé, on réalise de préférence le refroidissement des boudins en les disposant sur une bande de transport supérieure sur laquelle on les soumet soit à un arrosage avec de l'azote liquide, notamment à l'aide de moyens d'arrosage adéquats tels que des buses de pulvérisation, soit à une ventilation avec un courant d'air froid, ou soit encore à un contact avec une surface refroidie de la bande elle-même, par exemple. On peut subdiviser les boudins en tronçons en les faisant chuter sur au moins une bande de transport inférieure dont une extrémité amont peut être prévue au-dessous d'une extrémité aval de la bande supérieure. Pour que les boudins se subdivisent, autrement dit se cassent, en tronçons indépendants relativement courts, et présentent notamment une longueur de environ 5-10 cm adéquate pour l'étape de granulation iv), il faut d'une part que les boudins disposés sur la bande de transport supérieure n'adhèrent pas trop à la bande et d'autre part qu'ils n'adhèrent pas entre eux sur cette bande.

C'est pourquoi il est recommandé d'ajuster la température du mélange de matière amylacée et de graisse à une valeur juste suffisante pour qu'il soit extrudable, les boudins extrudés pouvant présenter alors une texture suffisamment ferme pour garder leur forme cylindrique et ne pas s'affaisser sur la bande. Ceci peut se réaliser en ajustant de manière précise la température d'un liquide circulant dans le double manteau de la vis mélangeuse, voire dans une enceinte de refroidissement qui peut renfermer les tubes verticaux sur une partie au moins de leur longueur.

C'est pourquoi également, dans le présent appareil, on peut prévoir en ii) un peigne généralement vertical, à distance et à côté de la rangée de tubes verticaux, chaque dent du peigne présentant une extrémité libre recourbée vers l'horizontale et se terminant à hauteur d'un orifice de sortie d'un tube d'extrusion. A l'aide d'un tel peigne, on peut en effet faire tomber d'éventuelles gouttes d'huile adhérant aux boudins qui pourraient favoriser l'adhérence des boudins entre eux et sur ladite bande supérieure.

A l'étape iv) du présent procédé, on réalise de préférence la réduction en granules, autrement dit la granulation des tronçons de boudins en les projetant au travers d'une grille cylindrique fixe, de l'intérieur vers l'extérieur, à l'aide d'un jeu de palettes rotatives coaxial prévu à l'intérieur de la grille. On réduit ainsi de préférence lesdits boudins en granules cylindriques de 1-5 mm de diamètre et 2-10 mm de longueur présentant une densité apparente d'environ 400 à 600 g/l, en les projetant au travers d'une grille présentant donc des trous ronds de diamètre compris entre 1 et 5 mm.

Cette manière de réaliser l'étape iv) du présent procédé, et le dispositif correspondant du présent appareil se sont révélés particulièrement efficaces car ils permettent de travailler proprement, de manière aisée, prolongée, constante et reproductible sans qu'il faille craindre aucun problème d'obstruction de la grille par des dépôts de mélange gras. Ce succès semble dû au fait qu'il est ainsi possible de faire passer lesdits boudins durcis d'un seul coup au travers de la grille.

L'appareil pour la mise en oeuvre du procédé selon la présente invention est décrit ci-après en référence au dessin annexé dans lequel:
- La Fig. 1 représente un schéma d'ensemble d'une forme de réalisation de l'appareil,
- La Fig. 2 est une vue de face d'une forme d'exécution du dispositif d'extrusion de l'appareil,
- La Fig. 3 est une vue de côté en coupe partielle du dispositif d'extrusion représenté à la Fig. 2,
- La Fig. 4 est une vue schématique en coupe partielle d'une forme de réalisation du dispositif de granulation de l'appareil, et
- La Fig. 5 est une vue de dessus du dispositif de granulation représenté à la Fig. 4.

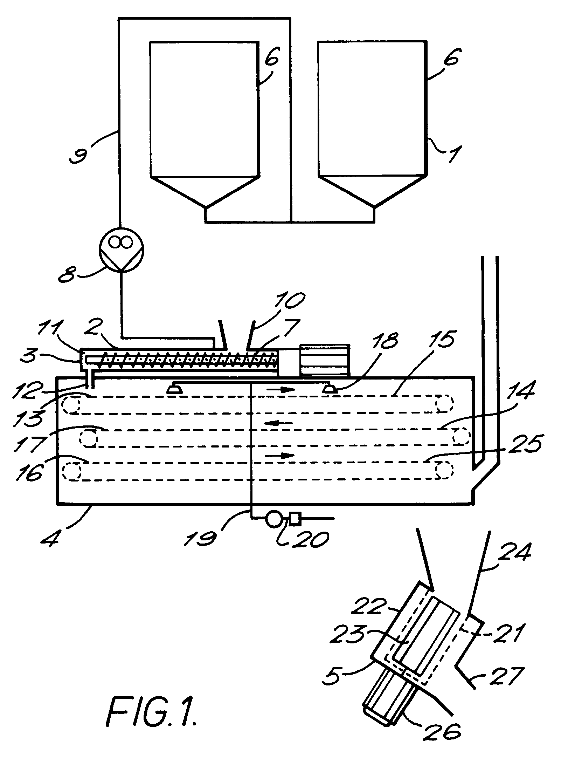

Comme on peut le voir à la Fig. 1, l'appareil pour la mise en oeuvre du procédé selon la présente invention comprend
i) un dispositif de chauffage 1 d'une graisse et un dispositif de mélange 2 d'une matière amylacée et de la graisse fondue,
ii) un dispositif d'extrusion 3 du mélange sous forme de boudins,
iii) un dispositif de refroidissement et subdivision 4 des boudins en tronçons, et
iv) un dispositif de granulation 5 des tronçons de boudins.

En i), le dispositif de chauffage 1 d'une graisse comprend plusieurs cuves métalliques 6 chauffées électriquement. Le dispositif de mélange 2 d'une matière amylacée et de la graisse fondue comprend une double vis mélangeuse 7 horizontale à double manteau. Une conduite 9 relie le dispositif de chauffage 6 au dispositif de mélange 2 par l'intermédiaire d'une pompe 8 doseuse de graisse fondue. La conduite 9 débouche au-dessus de la double vis 7 en aval d'une trémie 10 d'alimentation en matière amylacée.

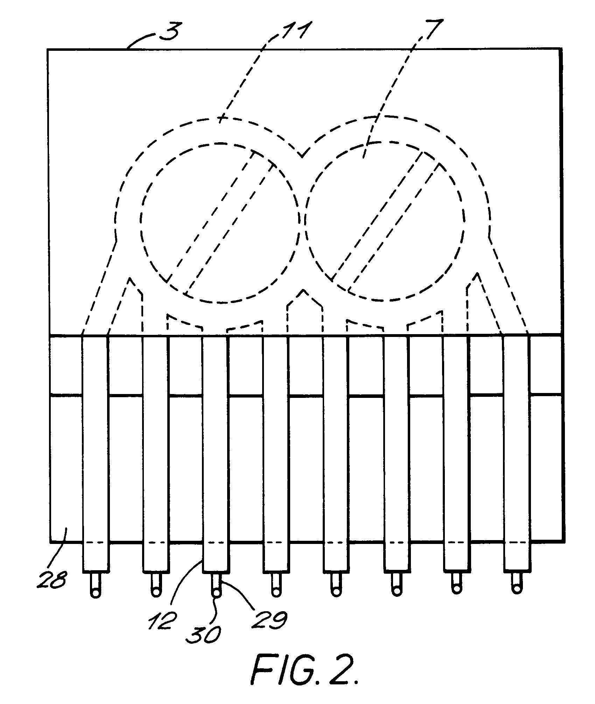

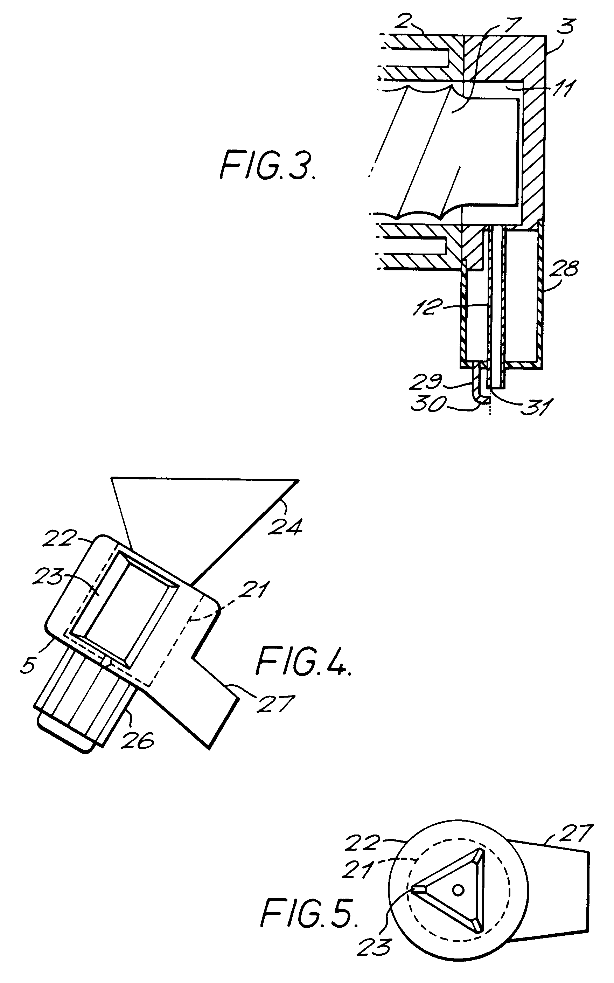

En ii), et comme on le voit plus en détail aux Fig. 2 et 3, le dispositif d'extrusion 3 comprend une chambre de déviation 11 prévue à l'extrémité aval de la vis mélangeuse 7 et communiquant avec une rangée de tubes d'extrusion 12 verticaux. Le dispositif d'extrusion comprend également une enceinte de refroidissement 28 renfermant les tubes verticaux 12 sur la plus grande partie de leur longueur et dans laquelle on peut faire circuler le même fluide que l'on utilise pour ajuster la température du double manteau de la vis mélangeuse 7. Ce dispositif d'extrusion comprend enfin un peigne généralement vertical prévu à distance et à côté de la rangée de tubes verticaux 12, chaque dent 29 du peigne présentant une extrémité libre 30 recourbée vers l'horizontale et se terminant à hauteur de l'orifice de sortie 31 d'un tube d'extrusion 12.

En iii), le dispositif de refroidissement et subdivision 4 des boudins comprend une bande de transport supérieure dont l'extrémité amont 13 est prévue au-dessous de ladite rangée de tubes d'extrusion 12, une première bande de transport inférieure dont l'extrémité amont 14 est prévue au-dessous de l'extrémité aval 15 de la bande supérieure, une seconde bande de transport inférieure dont l'extrémité amont 16 est prévue au-dessous de l'extrémité aval 17 de la première bande de transport inférieure, et des moyens d'arrosage avec de l'azote liquide réalisés sous forme de buses de pulvérisation 18 prévues au-dessus de la bande supérieure et alimentées par une conduite 19 les reliant à un réservoir, non représenté, par l'intermédiaire d'un régulateur de débit et de pression 20.

En iv), et comme on le voit plus en détails aux Fig. 4 et 5, le dispositif de granulation 5 de tronçons de boudins comprend une grille cylindrique fixe 21, un manteau coaxial 22 extérieur à la grille et un jeu de palettes rotatives 23 coaxial intérieur à la grille. Une trémie 24 d'alimentation en tronçons de boudins est prévue au-dessous de l'extrémité aval 25 de ladite seconde bande de transport inférieure et communique avec l'extrémité supérieure ouverte de la grille cylindrique 21. Un moteur puissant 26 entraîne le jeu de palettes rotatives 23. Enfin, un canal d'évacuation 27 des granules est prévu en communication avec et en contrebas de l'espace laissé libre entre la grille 21 et le manteau coaxial extérieur 22.

L'exemple ci-après illustre une forme de réalisation du procédé selon la présente invention. Les pourcentages et parties y sont donnés en poids.

### Exemple

A l'aide d'un appareil semblable à celui représenté au dessin, on prépare des granulés d'une matière alimentaire permettant la préparation instantanée d'un roux. Pour ce faire,
i) on fait fondre à environ 55°C une graisse de palme hydrogénée présentant un point de limpidité de environ 48°C.
   On mélange 40% de graisse fondue et 60% de farine de blé préséchée présentant une température de environ 20°C et une teneur en humidité résiduelle de environ 5%, les vis du dispositif de mélange à double vis tournant à environ 210 tours/min.
ii) on extrude le mélange sous forme de boudins cylindriques de environ 6 mm de diamètre, les tubes du dispositif d'extrusion présentant un diamètre intérieur de 6 mm.
   On ajuste finement la température du liquide de refroidissement du dispositif de mélange et de l'enceinte de refroidissement des tubes d'extrusion de manière que, compte tenu de l'échauffement par frottement du mélange dans ces dispositifs, les boudins extrudés présentent une température de environ 38-39°C. A cette température, le mélange est encore extrudable et les boudins extrudés présentent une texture suffisamment ferme pour garder leur forme cylindrique et ne pas s'affaisser sur la bande de transport supérieure du dispositif de refroidissement sur laquelle ils sont déposés.
iii) on refroidit les boudins en les soumettant à un arrosage avec de l'azote liquide. Pour ce faire, on pulvérise environ 0,2 kg d'azote liquide par kg de boudins au-dessus de ladite bande de transport supérieure. Les boudins cylindriques se brisent alors en tronçons de environ 5-10 cm de longueur en chutant de la bande supérieure sur la première bande de transport inférieure. Durant leur transport sur la première et la seconde bandes inférieures, les tronçons de boudins sont encore soumis à l'effet de refroidissement exercé par les vapeurs d'azote qui descendent de la bande supérieure. Ils présentent une température de environ 30-34°C à la sortie du dispositif de refroidissement.
iv) on réduit les tronçons de boudins en granulés cylindriques de environ 2 mm de diamètre et environ 2-10 mm de longueur en les introduisant dans le dispositif de granulation où ils sont projetés, de l'intérieur vers l'extérieur, au travers de la grille cylindrique fixe qui présente des trous ronds de 2 mm de diamètre. Ils traversent cette grille d'un coup sous l'effet de propulsion violent exercé par le jeu de palettes rotatives coaxial que l'on fait tourner à environ 360 tours/min.

Les granulés ainsi produits présentent une densité apparente de environ 500 g/l. Ils ont un écoulement libre et conservent cette propriété même après un séjour prolongé à température ambiante. Ils sont dispersables dans l'eau bouillante et permettent de préparer aisément des sauces liées et des potages.

On peut en particulier les utiliser pour lier des fonds de cuisson de viandes, volailles, poissons et légumes, pour préparer des liaisons pour ragoûts ou potées de légumes, ou pour apprêter des sauces et soupes blanches ou veloutées à base de lait, de bouillon ou d'eau, par exemple.

Pour ces utilisations, on peut simplement disperser au fouet 70 g ou 100 g de granulés par litre de liquide bouillant, selon que l'on veut obtenir un potage ou une sauce, et laisser reposer ensuite durant environ 5 min, tout en remuant de temps en temps, par exemple.

## Revendications

1. Procédé de préparation de granulés d'une matière alimentaire de base pour sauces et potages à partir d'une matière amylacée et d'une graisse, dans lequel,
i) on fait fondre la graisse et l'on mélange la matière amylacée et la graisse fondue,
ii) on extrude le mélange sous forme de boudins,
iii) on refroidit les boudins pour les durcir et on les subdivise en tronçons, et
iv) l'on réduit les tronçons de boudins en granules en les projetant au travers d'une grille.

2. Procédé selon la revendication 1, dans lequel:
- à l'étape i), on mélange la matière amylacée et la graisse dans un rapport pondéral de 75:25 à 50:50,
- à l'étape ii), on extrude le mélange sous forme de boudins cylindriques de 3-10 mm de diamètre,
- à l'étape iii), on subdivise les boudins en tronçons de 5-10 cm de longueur, et
- à l'étape iv), on réduit les tronçons de boudins en granulés cylindriques de 1-5 mm de diamètre et 2-10 mm de longueur.

3. Procédé selon la revendication 1, dans lequel la matière amylacée est une farine de céréale et la graisse présente un point de limpidité de 35-50°C.

4. Procédé selon la revendication 1, dans lequel la matière amylacée est une farine de blé préséchée présentant une teneur en humidité résiduelle de 3-10% et la graisse est une graisse d'arachides ou de palme.

5. Procédé selon la revendication 1, à l'étape iii) duquel on dispose les boudins extrudés sur une bande de transport supérieure sur laquelle on les soumet à un arrosage avec de l'azote liquide, et on les subdivise en les faisant chuter de la bande supérieure sur au moins une bande de transport inférieure.

6. Procédé selon la revendication 1, à l'étape iv) duquel on projette les tronçons au travers d'une grille cylindrique fixe, de l'intérieur vers l'extérieur, à l'aide d'un jeu de palettes rotatives coaxial prévu à l'intérieur de la grille.

7. Appareil pour la mise en oeuvre du procédé selon la revendication 1, comprenant
i) un dispositif de chauffage d'une graisse et un dispositif de mélange d'une matière amylacée et de la graisse fondue,
ii) un dispositif d'extrusion du mélange sous forme de boudins,
iii) un dispositif de refroidissement et subdivision des boudins en tronçons, et
iv) un dispositif de granulation des tronçons de boudins.

8. Appareil selon la revendication 7, dans lequel,
en i), le dispositif de mélange de la matière amylacée et de la graisse fondue comprend une vis mélangeuse à double manteau,
en ii), le dispositif d'extrusion comprend une chambre de déviation prévue à une extrémité aval de ladite vis mélangeuse et communiquant avec une rangée de tubes d'extrusion verticaux,
en iii), le dispositif de refroidissement et subdivision des boudins comprend une bande de transport supérieure dont une extrémité amont est prévue au-dessous de ladite rangée de tubes d'extrusion, au moins une bande de transport inférieure dont une extrémité amont est prévue au-dessous d'une extrémité aval de la bande supérieure, et des moyens d'arrosage avec de l'azote liquide prévus au-dessus de la bande supérieure, et
en iv), le dispositif de granulation des tronçons de boudins comprend une grille cylindrique fixe, un manteau coaxial extérieur à la grille et un jeu de palettes rotatives coaxial intérieur à la grille.

9. Appareil selon la revendication 8, dans lequel,
en iii), lesdits tubes d'extrusion présentent un diamètre intérieur de 3-10 mm, et
en iv), la grille présente des trous ronds de diamètre compris entre 1 et 5 mm.

10. Appareil selon la revendication 8, dans lequel, en ii), le dispositif d'extrusion comprend une enceinte de refroidissement renfermant les tubes verticaux sur une partie de leur longueur, ainsi qu'un peigne généralement vertical prévu à distance et à côté de la rangée de tubes verticaux, chaque dent du peigne présentant une extrémité libre recourbée vers l'horizontale et se terminant à hauteur d'un orifice de sortie d'un tube d'extrusion.

## Claims

1. A process for the production of granules of a food base for sauces and soups from an amylaceous material and a fat, in which
i) the fat is melted and the amylaceous material and the molten fat are mixed,
ii) the mixture is extruded in the form of strands,
iii) the strands are hardened by cooling and are subdivided into sections and
iv) the strand sections are size-reduced to granules by projection through a grill.

2. A process as claimed in claim 1, in which
- in step i), the amylaceous material and the fat are mixed in a ratio by weight of 75:25 to 50:50,
- in step ii), the mixture is extruded in the form of cylindrical strands 3 to 10 mm in diameter,
- in step iii), the strands are subdivided into sections 5 to 10 cm long and
- in step iv), the strand sections are size-reduced to cylindrical granules 1 to 5 mm in diameter and 2 to 10 mm long.

3. A process as claimed in claim 1, in which the amylaceous material is a cereal flour and the fat has a clear point of 35 to 50°C.

4. A process as claimed in claim 1, in which the amylaceous material is a predried wheat flour having a residual moisture content of 3 to 10% and the fat is a peanut or palm fat.

5. A process as claimed in claim 1, in step iii) of which the extruded strands are arranged on an upper conveyor belt where they are sprinkled with liquid nitrogen and are subdivided by dropping from the upper conveyor belt onto at least one lower conveyor belt.

6. A process as claimed in claim 1, in step iv) of which the sections are projected outwards through a fixed cylindrical grill by means of a coaxial set of rotating blades provided inside the grill.

7. An apparatus for carrying out the process claimed in claim 1 comprising
i) a unit for heating a fat and a unit for mixing an amylaceous material and molten fat,
ii) a unit for extruding the mixture in the form of strands,
iii) a unit for cooling and subdividing the strands into sections and
iv) a unit for granulating the strand sections.

8. An apparatus as claimed in claim 7, in which
in i) the unit for mixing amylaceous material and molten fat comprises a double-jacketed mixing screw,
in ii) the extrusion unit comprises a deflection chamber provided at a downstream end of the mixing screw and communicating with a row of vertical extrusion tubes,
in iii) the unit for cooling and subdividing the strands comprises an upper conveyor belt of which an upstream end is situated below the row of extrusion tubes, at least one lower conveyor belt of which an upstream end is situated below a downstream end of the upper conveyor belt and means for sprinkling liquid nitrogen arranged above the upper conveyor belt and
in iv) the unit for granulating the strand sections comprises a fixed cylindrical grill, a coaxial jacket outside the grill and a coaxial set of rotating blades inside the grill.

9. An apparatus as claimed in claim 8, in which,
in iii) the extrusion tubes have an internal diameter of 3 to 10 mm and
in iv) the grill has round holes between 1 and 5 mm in diameter.

10. An apparatus as claimed in claim 8, in which, in ii), the extrusion unit comprises a cooling enclosure surrounding the vertical tubes over part of their length and a generally vertical comb provided at a distance from and adjacent the row of vertical tubes, each tooth of the comb having a free end curved towards the horizontal and terminating level with an outlet orifice of an extrusion tube.

## Patentansprüche

1. Verfahren zum Herstellen eines Granulates eines Grundnahrungsmittels für Saucen und Suppen ausgehend von einem Stärkematerial und einem Fett, bei welchem
i) das Fett geschmolzen wird und das Stärkematerial und das geschmolzene Fett gemischt werden,
ii) die Mischung in Form von Würsten extrudiert wird,
iii) die Würste abgekühlt werden, um sie zu erhärten, und in Abschnitte unterteilt werden, und
iv) die Wurstabschnitte zu Granulat zerkleinert werden, indem sie durch ein Gitter getrieben werden.

2. Verfahren nach Anspruch 1, bei welchem:
- im Schritt i) das Stärkematerial und das Fett in einem Gewichtsverhältnis von 75:25 bis 50:50 gemischt werden,
- im Schritt ii) die Mischung in Form von zylindrischen Würsten mit 3-10 mm Durchmesser extrudiert wird,
- im Schritt iii) die Würste in Abschnitte mit 5-10 cm Länge unterteilt werden, und
- im Schritt iv) die Wurstabschnitte zu zylindrischem Granulat mit 1-5 mm Durchmesser und 2-10 mm Länge zerkleinert werden.

3. Verfahren nach Abspruch 1, bei welchem das Stärkematerial ein Getreidemehl ist und das Fett einen Klarpunkt von 35-50°C aufweist.

4. Verfahren nach Anspruch 1, bei welchem das Stärkematerial ein vorgetrocknetes Weizenmehl ist, das einen Restfeuchtigkeitsgehalt von 3-10% aufweist, und das Fett ein Erdnußfett oder Palmfett ist.

5. Verfahren nach Anspruch 1, bei dessen Schritt iii) die extrudierten Würste auf einem oberen Transportband angeordnet werden, auf dem sie einer Berieselung mit flüssigem Stickstoff unterzogen werden, und zerteilt werden, indem man sie vom oberen Band auf mindestens ein unteres Transportband fallen läßt.

6. Verfahren nach Anspruch 1, bei dessen Schritt iv) die Abschnitte durch ein feststehendes zylindrisches Gitter von innen nach außen getrieben werden, und zwar mit Hilfe eines Satzes von rotierenden Schaufeln, der koaxial im Inneren des Gitters angeordnet ist.

7. Vorrichtung zur Durchführung des Verfahrens nach Anspruch 1, mit
i) einer Einrichtung zum Erhitzen eines Fettes und einer Einrichtung zum Mischen eines Stärkematerials mit dem geschmolzenen Fett,
ii) einer Einrichtung zum Extrudieren der Mischung in Form von Würsten,
iii) einer Einrichtung zum Abkühlen und Unterteilen der Würste in Abschnitte, und
iv) einer Einrichtung zum Granulieren der Wurstabschnitte.

8. Vorrichtung nach Anspruch 7, bei welcher
unter i) die Einrichtung zum Mischen des Stärkematerials und des geschmolzenen Fettes einen Doppelmantelschneckenmischer aufweist,
unter ii) die Extrusionseinrichtung eine Umlenkkammer aufweist, die an einem stromabwärtigen Ende des Schneckenmischers angeordnet ist und mit einer Reihe von vertikalen Extrusionsrohren in Verbindung steht,
unter iii) die Einrichtung zum Abkühlen und Unterteilen der Würste ein oberes Transportband aufweist, dessen stromaufwärtiges Ende unterhalb der Reihe von Extrusionsrohren angeordnet ist, zumindest ein unteres Transportband, dessen stromaufwärtiges Ende unterhalb eines stromabwärtigen Endes des oberen Bandes angeordnet ist, und Mittel zur Berieselung mit flüssigem Stickstoff, welche oberhalb des oberen Bandes angeordnet sind, und
unter iv) die Einrichtung zum Granulieren der Wurstabschnitte ein feststehendes zylindrisches Gitter, einen Mantel, der zum Gitter koaxial angeordnet ist und außerhalb des Gitters liegt, und einen Satz von rotierenden Schaufeln aufweist, welcher koaxial zum Gitter und im Inneren des Gitters liegt.

9. Vorrichtung nach Anspruch 8, bei welcher
unter iii) die Extrusionsrohre einen Innendurchmesser von 3-10 mm aufweisen, und
unter iv) das Gitter runde Löcher mit einem Durchmesser zwischen 1 und 5 mm aufweist.

10. Vorrichtung nach Anspruch 8, bei welcher unter ii) die Extrusionseinrichtung ein Kühlgefäß aufweist, das die vertikalen Rohre über einen Teil ihrer Höhe umschließt, sowie einen allgemein vertikalen Kamm, der in einem Abstand zu und seitlich neben der Reihe von vertikalen Rohren angeordnet ist, wobei jeder Zahn des Kammes ein freies Ende aufweist, das in die horizontale Richtung gekrümmt ist und auf Höhe einer Auslaßöffnung eines Extrusionsrohres endet.
